(19)

(11) **EP 1 217 261 B1**

(12) **EUROPÄISCHE PATENTSCHRIFT**

(45) Veröffentlichungstag und Bekanntmachung des Hinweises auf die Patenterteilung:
**17.02.2010 Patentblatt 2010/07**

(51) Int Cl.:
***F16H 57/04*** *(2010.01)*

(21) Anmeldenummer: **01128967.5**

(22) Anmeldetag: **06.12.2001**

(54) **Optimierung der Zeitintervalle für Ölwechsel bei einem Getriebe**

Optimization of the time intervals for oil change of a transmission

Optimisation des intervalles de temps de vidange d'huile pour une transmission

(84) Benannte Vertragsstaaten:
**AT BE CH CY DE DK ES FI FR GB GR IE IT LI LU MC NL PT SE TR**

(30) Priorität: **20.12.2000 DE 10063935**
**31.08.2001 DE 10142751**

(43) Veröffentlichungstag der Anmeldung:
**26.06.2002 Patentblatt 2002/26**

(73) Patentinhaber: **SEW-EURODRIVE GmbH & Co. KG**
**76646 Bruchsal (DE)**

(72) Erfinder:
- **Bader, Antonius**
  **76646 Bruchsal (DE)**
- **Zimmermann, Heinrich**
  **76646 Bruchsal (DE)**
- **Vittallowitsch, Udo**
  **76694 Forst (DE)**
- **Tüngler, Eberhard, Dr.**
  **76646 Bruchsal (DE)**

(56) Entgegenhaltungen:
**EP-A- 0 252 481** **EP-A- 1 049 235**
**EP-A- 1 054 192** **WO-A-00/32967**
**DE-A- 10 026 223** **DE-A- 19 704 226**
**DE-A- 19 706 486** **DE-A- 19 755 128**
**DE-C- 19 856 941** **US-A- 4 839 831**
**US-A- 5 944 632**

- **PATENT ABSTRACTS OF JAPAN Bd. 0060, Nr. 08 (P-098), 19. Januar 1982 (1982-01-19) & JP 56 133658 A (KOMATSU LTD), 19. Oktober 1981 (1981-10-19)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine Vorrichtung bei einem Antrieb und eine Verwendung der Vorrichtung bei einem Verfahren zur Schmlerstoffalterungsbestimmung.

Es ist allgemeines Fachwissen, dass bei Getriebemotoren als Schmierstoff Öl eingesetzt wird, das nach vom Hersteller der Getriebe in den Bedienungsanleitungen angegebenen Zeitintervallen auszutauschen oder mindestens zu überprüfen ist, insbesondere wegen der durch Oxidation und andere Vorgänge bedingte Alterung. Insbesondere gibt es sogar Anwendungen wie Windkraftwerke oder dergleichen, bei denen der Austausch unter Zuhilfenahme von Hubschraubern ausgeführt werden muss. Dies ist aufwendig und kostspielig.

Aus der DE 197 55 128 A1 ist ein Verbrennungsmotor mit Getriebe bekannt, wobei am Getriebe ein Temperatursensor vorgesehen ist. Wenn die Temperatur während des Betriebs zu hoch wird, wird das Motorausgangsdrehmoment durch eine Steuerungsvorrichtung reduziert. Nachteilig ist dabei, dass keine Information über Schmierstoffwechsel wegen Ölalterung oder dergleichen angezeigt wird.

Aus der DE198 60 353C1 ist ein Getriebe mit Sensoren für Druckmessung bekannt, die aber ebenfalls keine Information über Schmierstoffwechsel wegen Ölalterung oder dergleichen anzeigen.

Aus der DE 197 06 486 A1 ist ein Oberflächenwellen-Sensor zur Bestimmung des Alterungszustandes von Öl bekannt. Von Nachteil ist dabei, dass der Sensor kostspielig ist. Außerdem muss zur Durchführung des Messvorgangs immer die Größe, also beispielsweise die Viskosität, und gleichzeitig die Temperatur gemessen werden. Entsprechend kostspielig und aufwendig ist daher auch die elektronische Schaltung. Darüber hinaus wird immer ein Ausgangszustand mit einem aktuellen Messwert verglichen. Ein Messfehler im Ausgangszustand, beispielsweise bedingt durch ein Schmutzpartikel, verfälscht also alle nachfolgenden Ergebnisse derart, dass sie zu Fehlern führen können.

Aus der DE196 08 591 A1 ist eine Ölnachfüllautomatik bekannt, die bei zu niedrigem Ölniveau Öl nachfüllt. Dabei wird nachteiligerweise die Ölalterung nicht berücksichtigt.

Aus der US 5 944 632 ist eine Vorrichtung mit einem Getriebe und einem Sensor bekannt, wobei das Getriebe mit einem umrichtergespeisten Elektromotor mittelbar verbunden ist und wobei das Getriebe ein Schmlermittel umschlleßt gemäß dem einleitenden Teil des Anspruchs 1. Der Sensor, mit dem die Temperatur des Schmiermittels gemessen wird, ist mit der Signalelektronik verbunden, um den die Ölpumpe antreibenden Motor zu steuern.

Der Erfindung liegt daher die Aufgabe zugrunde, bei einem Getriebe, insbesondere einem mit einem Elektromotor oder Generator verbundenen Getriebe, die Zeitintervalle für Ölwechsel optimierbar zu gestalten.

Erfindungsgemäß wird die Aufgabe bei der Vorrichtung nach den in Anspruch 1 angegebenen Merkmalen und bei der Verwendung nach den in Anspruch 7 angegebenen Merkmalen gelöst.

Wichtige Merkmale der Erfindung bei der Vorrichtung sind, dass die Vorrichtung mindestens ein Getriebe und mindestens einen Sensor umfasst,
wobei das Getriebe mindestens einstufig ausgeführt ist und mit einem umrichtergespeisten Elektromotor mindestens mittelbar verbunden Ist,
und wobei das Getriebe mindestens ein Schmiermittel umschließt,
und wobei der Sensor derart elektrisch mit der Slgnalelektronik des Umrichters verbunden ist und mit dem Getriebe derart mechanisch verbunden ist, dass mittels des Sensors mindestens eine physikalische Größe des Schmiermittels oder eine mit einer solchen physikalischen Größe verknüpfte Größe messbar ist,
und die Signalelektronik des Umrichters derart gestaltet ist, dass die gemessenen Werte der Größe zum Steuern und Regeln des Elektromotors und zur Bestimmung einer anzeigbaren oder über Feldbus übermittelbaren Information für Schmierstoffwechsel und/oder Schmierstoffzustand verwendbar sind.

Von Vorteil ist dabei, dass die eigentliche und wirkliche Belastung des Öls feststellbar ist, die durch Wirken der jeweiligen Temperaturen beim Betrieb, Verschmutzungen oder sonstige Einflüsse, wie beispielsweise chemische Reaktionen mit Stoffen der Umgebung des Öls, vorhanden ist. Somit sind die Ölwechselintervalle verlängerbar, wodurch ein Kostenvorteil durch Öl- und Arbeitsersparnis entsteht. Insbesondere bei großen Getrieben und schwer zugänglichen Getrieben, beispielsweise in einer Windkraftanlage, sind die Vorteile beträchtlich. Ebenfalls ergeben sich ein verbesserter Umweltschutz wegen des geringeren Ölverbrauchs und eine erhöhte Prozesssicherheit, beispielsweise in einer Produktionslinie.

Erfindungsgemäß ist der Sensor derart elektrisch mit der Signalelektronik des Umrichters verbunden und mit dem Getriebe derart mechanisch verbunden, dass mittels des Sensors mindestens eine physikalische Größe des Schmiermittels oder eine mit einer solchen physikalischen Größe verknüpfte Größe messbar ist, und die Signalelektronik des Umrichters ist derart gestaltet, dass die gemessenen Werte der Größe zum Steuern und Regeln des Elektromotors und zur Bestimmung einer anzeigbaren oder über Feldbus übermittelbaren Information für Schmierstoffwechsel verwendbar sind. Von Vorteil ist dabei, dass vorhandene Umrichter ohne wesentliche Abänderungen oder Umbauten verwendbar sind, da sie meistens einen Mikrocontroller in ihrer Signalelektronik umfassen, in welchem sogar Analog-Digital-Wandler integriert sind. Dadurch ist der Messwert sogar in analoger Weise dem Umrichter elektrisch zuleitbar und die weitere Verarbeitung, Auswertung und Berücksichtung als reine Software im Umrichter ausführbar. Die Herstellkosten sind also äußerst gering. Außerdem ist der Umrichter programmierbar, wodurch eine hohe Flexibilität erreichbar ist. Insbesondere sind Auswertealgorithmen und/oder Kennlinien leicht und schnell anpass- und/ oder veränderbar.

Bei einer vorteilhaften Ausgestaltung ist die physikalische Größe oder verknüpfte Größe mindestens die Temperatur, die Viskosität und/oder die komplexe Dielektrizität, umfassend. Von Vorteil ist dabei, dass einfach messbare Größen, die wichtige Zustandsparameter des Schmierstoffs, wie Öl oder dergleichen, darstellen, verwendbar sind.

Bei einer vorteilhaften Ausgestaltung umfasst der Sensor mindestens einen Temperatursensor. Von Vorteil ist dabei, dass Temperatursensoren kostengünstig und bewährt sind. Außerdem ist die Temperatur auch bei Messung weiterer Größen bekannt. Somit sind die weiteren Größen immer zusammen mit der entsprechenden Temperatur des Getriebes auswertbar und/oder abspeicherbar.

Bei einer vorteilhaften Ausgestaltung umfasst der Sensor einen Oberflächenwellensensor. Von Vorteil ist dabei, dass die Viskosität des Öls direkt und schnell messbar ist. Außerdem wird zum Messen kein Öl verbraucht oder entnommen.

Bei einer vorteilhaften Ausgestaltung umfasst der Sensor einen Temperatursensor und einen Oberflächenwellensensor. Von Vorteil ist dabei, dass die Messwerte des Oberflächensensors, wie Viskosität oder dergleichen, immer zusammen mit der entsprechenden Temperatur des Getriebes auswertbar und/oder abspeicherbar sind.

Bei einer vorteilhaften Ausgestaltung ist der Oberflächenwellensensor derart ausgeführt, dass eine Viskosität und/oder die komplexe Dielektrizität messbar ist. Von Vorteil ist dabei, dass elektrische Leitfähigkeit, dielektrische Konstante und Viskosität erfassbar sind. Somit ist auch eingedrungenes Wasser detektierbar, da es große Änderungen der dielektrischen Konstante und auch der Leitfähigkeit des Öls bewirkt. Auch andere Verschmutzungen, wie beispielsweise metallischer Abrieb oder dergleichen, ist somit leicht detektierbar.

Bei einer vorteilhaften Ausgestaltung hängt die verknüpfte Größe eindeutig von einer oder mehreren physikalischen Größen ab und/oder ist aus ihr mindestens eine physikalische Größe mit genügender Genauigkeit herleitbar. Von Vorteil ist dabei, dass der Sensor nicht geeicht sein muss, sondern beispielsweise als verknüpfte Größe eine Ausgangsspannung oder ein Ausgangsstrom des Sensors verwendbar ist.

Bei einer vorteilhaften Ausgestaltung ist die mit den Sensor verbundene elektronische Schaltung mit einem Feldbus derart verbindbar, dass die gemessenen Werte der mindestens einen Größe an einen zentralen Rechner oder an einen Feldbusteilnehmer übertragbar sind. Von Vorteil ist dabei, dass eine Online-Diagnose und/oder -Überwachung ausführbar sind.

Bei einer weiteren vorteilhaften Ausgestaltung ist die elektronische Schaltung ein Umrichter oder ein Teil eines Umrichters. Von Vorteil ist dabei, dass eine kostengünstige Integration ausführbar ist, wobei auch eine gegen Verschmutzung dichte Verbindung ermöglicht ist.

Wichtige Merkmale der Erfindung bei der Verwendung sind, dass bei einem Verfahren zur Bestimmung der Schmierstoffalterung,

- vom Sensor (107) Werte physikalischer Größen des Schmierstoffs in der Vorrichtung gemessen werden,
- mit der mit dem Sensor (107) verbundenen elektronischen Schaltung die Werte derart verarbeitet, ausgewertet undloder weitergeleitet werden, dass
- zumindest bei Über- oder Unterschreiten bestimmter kritischer Werte eine Information über Schmlerstoffwechsel wegen Schmierstoffalterung und/oder Unbrauchbarkeit des Schmierstoffs erzeugt und dann angezeigt und/oder übermittelt wird.

Von Vorteil ist dabei, dass die Ölwechselintervalle verlängerbar sind, wobei ein Kostenvorteil durch Öl- und Arbeitsersparnis entsteht. Insbesondere bei großen Getrieben und schwer zugänglichen Getrieben, beispielsweise in einer Windkraftanlage, sind die Vorteile beträchtlich. Ebenfalls ergeben sich ein verbesserter Umweltschutz wegen des geringeren Ölverbrauchs und eine erhöhte Prozesssicherheit, beispielsweise in einer Produktionslinie.

Bei einer vorteilhaften Ausgestaltung werden mittels des Sensors Größen gemessen, die einen Einfluss haben auf eine oder mehrere Eigenschaften von Oberflächenwellen. Von Vorteil ist dabei, dass ein kostengünstig herstellbarer Oberflächenwellensensor verwendbar ist.

Bei einer vorteilhaften Ausgestaltung werden von der elektronische Schaltung die vom Sensor gemessenen Werte oder entsprechende Informationen über einen Feldbus an einen zentralen Rechner oder an weitere Feldbusteilnehmer übertragen, abgespeichert und/oder zum Auslösen von Aktionen, zum Steuern und/oder zum Regeln verwendet. Von Vorteil ist dabei, dass eine Online-Auswertung ausführbar ist.

Bei einer vorteilhaften Ausgestaltung wird die Veränderung der gemessenen Werte bestimmt und ab Überschreiten eines kritischen Wertes eine Warnung ausgelöst wird. Von Vorteil ist dabei, dass ein Ölwechsel aktiv herbei geführt wird und die wirkliche Belastung des Schmierstoffs berücksichtigt wird. Es sind also sogar längere Ölwechselintervalle ausführbar.

Bei einer vorteilhaften Ausgestaltung werden die Werte ein erstes Mal mindestens nach Inbetriebnahme und/oder Schmierstoffwechsel gemessen werden und mindestens ein weiteres Mal, wobei die mindestens beiden Werte bei gleicher Temperatur gemessen werden,
und wobei die Differenz mindestens der beiden Werte bestimmt wird, und wobei bei Überschreiten eines kritischen Wertes für diese mindestens eine Differenz eine Warnung ausgelöst wird. Von Vorteil ist dabei, dass die Änderung des Zustandes des Schmierstoffs infolge der wahren Belastung als Kriterium verwendbar ist.

Bei einer vorteilhaften Ausgestaltung wird nach Auslösen der Warnung und/oder nach Überschreiten eines kritischen Wertes ein Schmierstoffwechsel durchgeführt. Von Vorteil ist dabei, dass ein schnelles Reagieren ermöglicht ist, aber nur Schmierstoff gewechselt werden muss, der auch eine derartige Belastung aufweist, die zu einer detektierten Änderung eines Wertes führt.

**Bezugszeichenliste**

100 Ölpegel
101 Ritzel
102 Getriebegehäuse
103 Elektromotor
104 Abtriebswelle
105 Ölfüllung
106 Zahnrad
107 Sensor
108 Anschlusskopf
109 Leitung
110 Bodenplatte

200 Ölpegel
201 Ritzel
202 Getriebegehäuse
203 Elektromotor
204 Abtriebswelle
205 Ölfüllung
206 Zahnrad
207 Sensor
208 Anschlusskopf
209 Leitung
210 Klemmenkasten
211 Zuleitung
212 Wärmesperre
213 Bodenplatte

300 Ölpegel
301 Getriebegehäuse
302 Ritzel
303 Auswerteelektronik
304 Antriebswelle
305 Abtriebswelle
306 Ölfüllung
307 Zahnrad
308 Sensor
309 Anschlusskopf
310 Leitung
311 Wärmesperre
312 Bodenplatte

701 Auswerteelektronik
702 Wärmesperre
703 Getriebedeckel
704 Leitung

Es werden nun anhand die Abbildungen näher erläutert:

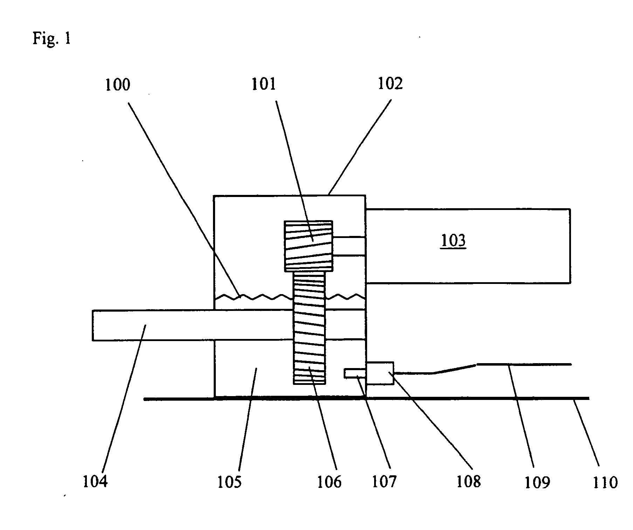

In der Figur 1 ist ein Getriebe skizziert.
Das Getriebe ist auf der Bodenplatte 110 montiert und weist ein Getriebegehäuse 102 auf, das in seinem Inneren als Schmierstoff Öl umschließt. Der Ölpegel 100 ist für die vorliegende Ausrichtung und Bauform des Getriebes angedeutet. Das Getriebe ist dabei auf der Bodenplatte montiert. Der Elektromotor 103 treibt das Ritzel 101 an, das mit einem Zahnrad 106 im Eingriff steht, welches wiederum mit der Abtriebswelle 104 verbunden ist.

Die Ölfüllung 105 ist derart gewählt, dass die Verzahnung des Zahnrades 106 zumindest ins Öl eintaucht und somit beim Drehen auch das Ritzel 101 geschmiert ist. Der Sensor 107 ist in ein Bohrung für eine Ölablassschraube eingeschraubt und weist nach außen einen Anschlusskopf 108 auf, von dem aus eine elektrische Leitung 109 zu einer elektronischen Schaltung führt.

Der Sensor 107 ist also im Bereich des Öls eingetaucht, wodurch physikalische Eigenschaften des Öls direkt detektierbar sind.

Bei anderen erfindungsgemäßen Ausführungsformen ist der Sensor 107 derart positioniert, dass der zumindest im Betrieb, also bei Drehen des Zahnrades 106 vom Öl benetzt wird.

Bei anderen erfindungsgemäßen Ausführungsformen befinden sich im Getriebe statt der in Figur 1 gezeigten Stirnradstufe, umfassend Zahnrad 106 und Ritzel 101, eine oder mehrere Getriebestufen, wie Schnekkengetriebestufe, Hypoid-Getriebestufe, Spiroplangetriebestufe, Kegelradgetriebestufe, Stirnradgetriebestufen, Exzentergetriebestufen oder dergleichen.

Bei weiteren erfindungsgemäßen Ausführungsformen wird ein solches Getriebe von einer Getriebebaureihe umfasst, die mehrere Baugrößen und in jeder Baugröße mehrere Varianten von Getrieben umfasst. Beispielsweise weist ein solches erfindungsgemäßes Getriebe eine Stirnradstufe oder Kegelradstufe auf, die bei einer anderen Variante durch eine andere Verzahnungsstufe, wie beispielsweise durch ein Planetengetriebestufe oder eine Hypoidstufe, ersetzt wird. Bei mehrstufigen Getrieben gilt dies für die jeweiligen Stufen.

Solche Getriebe weisen aber alle ein Gehäuse auf, in dem jeweils mehrere Bohrungen, insbesondere Gewindebohrungen mit Flachsenkung, vorhanden sind. In diese Bohrungen werden Ölverschlussschrauben oder Entlüftungsschrauben eingeschraubt. Die Bohrungen weisen alle dasselbe Gewinde auf. Die Ölverschlussschraube nimmt je nach Einbauposition die Funktion einer Ölablassschraube, einer Ölpegelkontrolle oder einer Entlüftung an. Die Bohrungen sind derart am Getriebe angebracht, dass immer jeweils mindestens ein Bohrung für eine Ölablassschraube, mindestens ein Bohrung für eine Ölpegelkontrollschraube und mindestens ein Bohrung für eine Entlüftungsschraube vorhanden ist. Insbesondere kann das Getriebe in verschiedenen Ausrichtungen in der Anwendung eingebaut sein. Die genannten Bohrungen sind zusätzlich derart positioniert, dass die genannten Funktionen alle in jeder erlaubten Ausrichtung ausführbar sind.

Der Sensor ist derart gestaltet, dass er in die Bohrungen dicht und fest einmontierbar ist, ohne dass Ölverlust auftritt. Insbesondere ist er in die Bohrung für Ölablass einschraubbar

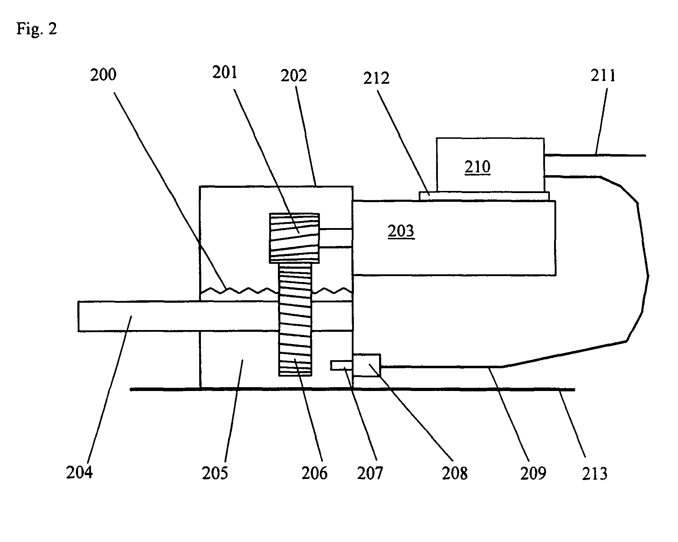

In der Figur 2, die nicht zur Erfindung gehört, ist lediglich als Beispiel ein weiteres Getriebe skizziert. Das Getriebe ist auf der Bodenplatte 213 montiert und weist hierbei ein Getriebegehäuse 202 auf, das in seinem Inneren als Schmierstoff Öl umschließt. Der Ölpegel 200 ist für die vorliegende Ausrichtung und Bauform des Getriebes angedeutet. Das Getriebe ist dabei auf der Bodenplatte montiert. Der Elektromotor 203 treibt das Ritzel 201 an, das mit einem Zahnrad 206 im Eingriff steht, welches wiederum mit der Abtriebswelle 204 verbunden ist.

Die Ölfüllung 205 ist derart gewählt, dass die Verzahnung des Zahnrades 106 zumindest ins Öl eintaucht und somit beim Drehen auch das Ritzel 201 geschmiert ist. Der Sensor 207 ist in ein Bohrung für eine Ölablassschraube eingeschraubt und weist nach außen einen Anschlusskopf 208 auf, von dem aus eine elektrische Leitung 209 zu einer elektronischen Schaltung führt.

Der Motor 203 weist zum Anschließen seiner Energieversorgung einen Klemmenkasten 210 auf. Die Zuleitung 211 ist elektrisch mit der Leitung 209 verbunden, wobei die Zuleitung 211 und die Leitung 209 innerhalb des Klemmenkastens 210 mit einer elektronische Schaltung verbunden sind, die zur Auswertung und Weiterverarbeitung der vom Sensor 207 erfassten Informationen dient. Diese elektronische Schaltung umfasst alternativ einen Busumsetzer, der die vom Sensor 207 erfassten Informationen über einen Feldbus, der von der Zuleitung 211 umfasst wird, an weitere Feldbusteilnehmer oder eine zentrale Steuerung weiterleitet.

Zum Schutz der elektronischen Schaltung ist eine Wärmesperre 212 zwischen Klemmenkasten 210 und Motor 203 vorhanden, wobei die Wärmesperre 212 einen derart hohen thermischen Widerstand aufweist, dass die Signalelektronik in keinem Betriebszustand gefährlich hohe Temperaturen erreicht. Insbesondere ist dieser thermische Widerstand der Wärmesperre 212 größer als der thermische Widerstand vom Motor zur Umgebung.

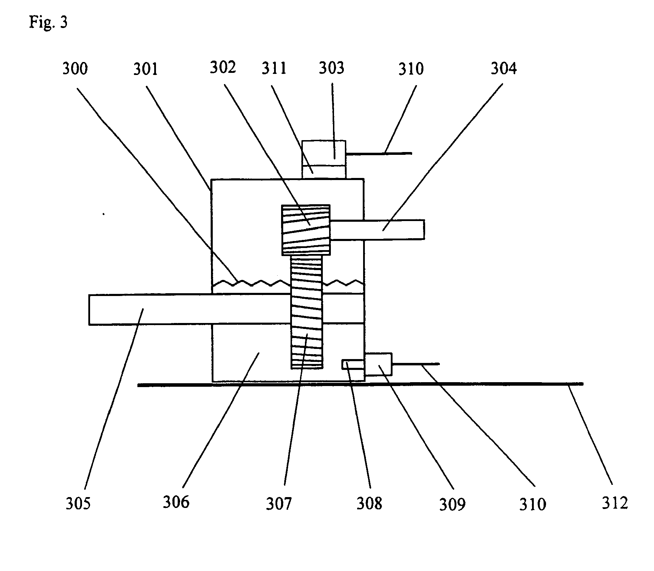

In der Figur 3, die nicht zur Erfindung gehört, ist lediglich als Beispiel ein weiteres Getriebe skizziert. Das Getriebe ist auf der Bodenplatte 313 montiert und weist hierbei ein Getriebegehäuse 301 auf, das in seinem Inneren als Schmierstoff Öl umschließt. Der Ölpegel 300 ist für die vorliegende Ausrichtung und Bauform des Getriebes angedeutet. Das Getriebe ist dabei auf der Bodenplatte montiert. Das Getriebe ist von einem Elektromotor antreibbar über das Ritzel 302 oder es ist mit einem Generator oder einer anderen Vorrichtung verbunden. Bei all diesen Anwendungen steht das Ritzel 302 mit einem Zahnrad 307 im Eingriff, welches mit der Abtriebswelle 305 verbunden ist.

Die Ölfüllung 306 ist derart gewählt, dass die Verzahnung des Zahnrades 307 zumindest ins Öl eintaucht und somit beim Drehen auch das Ritzel 302 geschmiert ist. Der Sensor 308 ist in ein Bohrung für eine Ölablassschraube eingeschraubt und weist nach außen einen Anschlusskopf 309 auf, von dem aus eine elektrische Leitung 310 zu einer elektronischen Schaltung 303 mit Gehäuse führt, die über eine Wärmesperre 311 am Getriebe anmontiert ist.

Dabei weist die Wärmesperre 311 einen derart hohen thermischen Widerstand aufweist, dass die Signalelektronik der elektronischen Schaltung 303 in keinem Betriebszustand gefährlich hohe Temperaturen erreicht. Insbesondere ist dieser thermische Widerstand der Wärmesperre 212 größer als der thermische Widerstand vom Getriebe zur Umgebung.

Dabei dient die elektronischen Schaltung 303 zur Auswertung und Weiterverarbeitung der vom Sensor 308 erfassten Informationen. Diese elektronische Schaltung umfasst in **Weiterbildung** einen Busumsetzer, der die vom Sensor 308 erfassten Informationen über einen Feldbus an weitere Feldbusteilnehmer oder eine zentrale Steuerung weiterleitet.

**Der Sensor 107, 207, 308 ist beispielsweise** ein Temperatursensor; d.h., dass als physikalische Größe die Temperatur des Öls oder eine der Temperatur des Öls entsprechende Größe erfasst wird. Beispielhaft ist eine solche Größe die Temperatur der Sensorhalterung oder dergleichen. Denn eine solche Temperatur hinkt dem Verlauf der Temperatur des Öls nach, da die Sensorhalterung nicht verschwindende Wärmekapazität hat und die thermischen Widerstände innerhalb der aus Metall ausführbaren Sensorhalterung je nach Materialwahl kleiner sind als der thermische Widerstand zum Öl. Außerdem weist die Sensorhalterung je nach Ausführung einen kleineren thermischen Widerstand zur Umgebung auf als das Öl, wodurch die Temperatur der Sensorhalterung etwas niedriger ist als die Temperatur des Öls.

Im Folgenden wird nur vom Sensor zur Erfassung der Temperatur des Öls gesprochen. Die hier beschriebenen Abweichungen und ähnliche weitere Abweichungen werden nicht weiter speziell erwähnt. Analoges gilt bei weiteren erfindungsgemäßen Ausführungsbeispielen auch für die weiter genannten physikalischen Größen.

Bei einem weiteren erfindungsgemäßen Ausführungsbeispiel wird der Zustand des Öls, insbesondere die Alterung des Öls, mittels einer kritischen Kennlinie berücksichtigt. Dabei ist diese kritische Kennlinie in einem Diagramm einzeichenbar, bei welchem die Abszisse und Ordinate die Temperatur und die Betriebszeit ist. Jeder Temperatur ist also mittels der kritischen Kennlinie eine Betriebszeit zugeordnet. Diese Betriebszeit darf nicht überschritten werden, da die Funktion des Öls, insbesondere als Schmiermittel, danach nicht mehr gesichert ist. Erfindungsgemäß wird die Temperatur des Öls zu genügend dicht aufeinander folgenden Zeitpunkten erfasst und gemäß der Kennlinie gewichtet summierend bewertet. Die Zeitpunkte folgen beispielsweise im Abstand von einer Minute aufeinander. Je nach Wärmekapazität des Antriebs und anderen Parametern sind auch andere zeitliche Abstände vorteilhaft verwendbar.

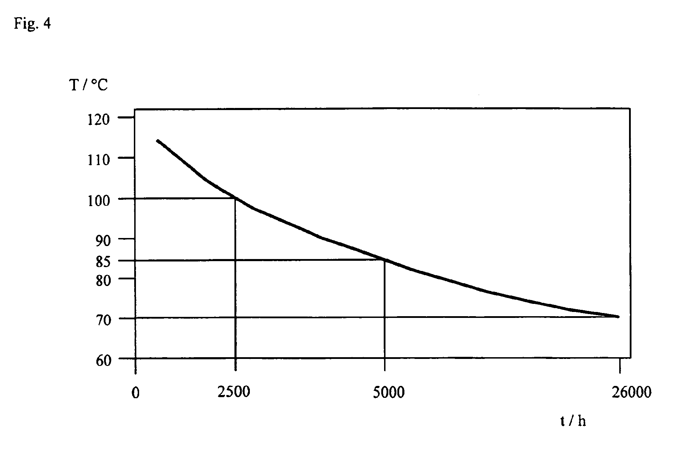

In der Figur 4 ist ein erfindungsgemäßes Ausführungsbeispiel gezeigt, bei dem in einem Diagramm beispielhafte Werte für Temperatur und Betriebszeit mit der entsprechenden kritischen Kennlinie aufgetragen sind. Beispielsweise erreicht ein Getriebe, das mit einer Temperatur von 100 °C betrieben wird, nach einer Betriebszeit von 2500 h seine kritische Betriebszeit. Mittels der erfindungsgemäßen Vorrichtung wird nun ein Verfahren ausführbar, das bei Erreichen dieser Betriebszeit von 2500 h bei 100 °C eine elektrische, optische oder akustische Warnung absetzt. In entsprechender Weise erreicht ein Getriebe, das mit einer Temperatur von 85 °C betrieben wird, nach einer Betriebszeit von 5000 h seine kritische Betriebszeit. Bei einem weiteren erfindungsgemäßen Ausführungsbeispiel erreicht das Getriebe nach einer beispielhaften Betriebszeit von 26000 h die maximal zulässige Betriebszeit des Öls bei Temperaturen unter 70°C. Danach soll dieses Öl ausgetauscht werden, da nicht unerhebliche Alterungsprozesse stattgefunden haben. Andere Sorten von Öl weisen andere maximal zulässige Betriebszeiten auf.

In einem weiteren erfindungsgemäßen Ausführungsbeispiel wird die Temperatur jeweils mit dem zugehörigen letzten zeitlichen Abstand multipliziert und unter Berücksichtigung eines Werts, der aus dem zu dieser Temperatur gehörenden Kennlinienpunkt abgeleitet ist, verrechnet.

Das zugehörige Verfahren wird im Folgenden genauer erläutert:

Es werden vom Sensor Werte physikalischer Größen, insbesondere die Temperatur, gemessen. Mit der mit dem Sensor verbundenen elektronischen Schaltung werden die Werte derart verarbeitet, ausgewertet und/oder weitergeleitet werden, dass zumindest bei Über- oder Unterschreiten bestimmter kritischer Werte eine Information über Schmierstoffwechsel wegen Schmierstoffalterung und/oder Unbrauchbarkeit des Schmierstoffs erzeugt und dann angezeigt und/oder übermittelt wird. Dazu wird mittels der elektronischen Schaltung die physikalische Größe $T$ immer wiederkehrend nach jeweiligen Zeitabständen $\Delta f_i$ gemessen, jeweils aus diesem gemessenen Wert mindestens unter Verwendung einer vorbestimmbaren Kennlinie ein Funktionswert $f(T_i)$ bestimmt, dieser Funktionswert mit dem jeweiligen Wert des Zeitabstandes $\Delta t_t$ multipliziert, als Ergebnis die Summe all dieser Multiplikationsergebnisse gebildet, das Ergebnis auf ein Über- oder Unterschreiten eines bestimmten kritischen Wertes $W_{KRIT}$ überwacht, eine Information über Schmierstoffwechsel wegen Schmierstoffalterung und/oder Unbrauchbarkeit des Schmierstoffs erzeugt und dann angezeigt und/oder übermittelt wird.

Das Ergebnis ist also als $\sum_i f(T_i)\Delta t_i$ darstellbar, wobei i alle Zeitabstände durchläuft. Sobald dieses Ergebnis den bestimmten kritischen Wert $W_{KRIT}$ erreicht, wird die genannte Information erzeugt. Die vorbestimmbare Kennlinie und die Funktion sind derart, dass bei konstanter physikalischer Größe $T$ die Beziehung $f(T) = \frac{W_{KRIT}}{t_{MAX}}$ ist, wobei $t_{MAX}$ die maximal zulässige Betriebsdauer des Schmierstoffes bei ununterbrochenem Betrieb und bei konstanter physikalischer Größe $T$ ist. Als physikalische Größe ist insbesondere die Temperatur $T$ vorteilhaft verwendbar.

In einem weiteren erfindungsgemäßen Ausführungsbeispiel wird dieses Verfahren mittels einer elektronischen Schaltung ausgeführt, die einen Frequenzgenerator umfasst, der ein Signal mit einer von der Temperatur abhängigen Frequenz erzeugt. Diese Abhängigkeit ist dabei der Kennlinie entsprechend gestaltet. Das Signal wird einem Zähler derart zugeführt, dass die Zahl der Perioden des Signals gezählt werden. Bei Erreichen eines kritischen Zählerstandes, beispielsweise 0 bei einer Ausführung als Abwärtszähler, gibt dann die elektronische Schaltung ein akustische, elektrische oder optische Warnung heraus. Dazu sind mit der elektronischen Schaltung entweder Mittel zur optischen Anzeige, Mittel zur Erzeugung akustischer Signale oder andere Mittel verbunden, wie beispielsweise ein 24V Signal oder ein Feldbusumsetzer zur Weiterleitung der Warnung an weitere Feldbusteilnehmer oder an einen zentralen Rechner.

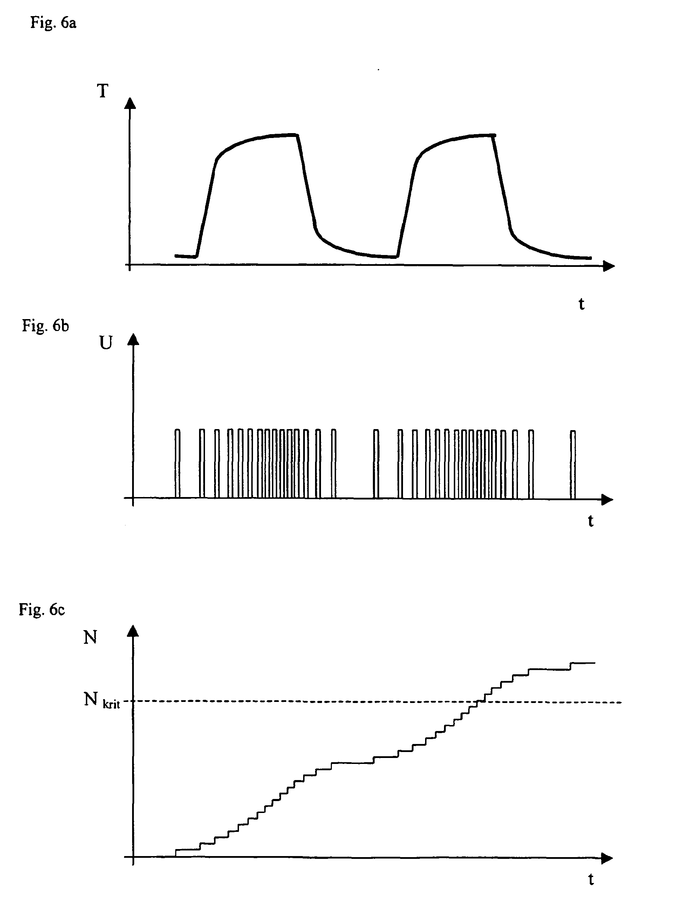

Die Figuren 6a, 6b und 6c verdeutlichen ein beschriebenes Ausführungsbeispiel mit beispielhaften Werten. In der Figur 6a ist ein Temperaturverlauf eines Getriebes über zwei Tage hinweg qualitativ gezeigt. Bei Betriebsbeginn steigt die Temperatur auf einen höheren Wert an. Die durch Wärmewiderstand und Wärmekapazität bedingte Zeitkonstante beträgt etwa 1 Stunde. Bei Betriebsende fällt die Temperatur wieder zurück. In der Figur 6b ist die gemäß der kritischen Kennlinie generierte Spannung des Frequenzgenerators gezeigt. Bei hohen Temperaturen hat der Spannungsverlauf eine hohe Frequenz, also viele Pulse pro Zeit. Bei niedrigen Temperaturen hat der Spannungsverlauf eine niedrige Frequenz, also wenige Pulse pro Zeit. In der Figur 6c ist der Zählerstand N des Zählers gezeigt, der die steigenden Flanken der Pulse des Spannungsverlaufs zählt. Bei Erreichen eines kritischen Zählerstandes $N_{kril}$ wird eine Warnung ausgelöst.

Bei dem Verfahren zur Auswertung ist beispielhaft bei der Funktion $g(f(T_i),t)=a^*|\sin(b^*f(T_i)^*t)|$ die Frequenz $f(T_i)$ temperaturabhängig. Statt der Sinusfunktion ist auch eine andere periodische Funktion verwendbar, beispielsweise eine Rechtecksfunktion oder Dreiecksfunktion a und b sind Parameter, insbesondere zur Normierung und Anpassung. Die Bildung des Zählerstandes entspricht somit der Bildung von $\sum_i g(f(T_i),t)\Delta t_i$. Bei Erreichen eines kritischen Zählerstandes $N_{kril}$ wird eine Warnung ausgelöst, also beispielsweise eine Warnung für Schmierstoffwechsel.

In einem anderen erfindungsgemäßen Ausführungsbeispiel werden die vom Sensor gelieferten elektrischen Größen A/D-gewandelt und einem Mikrocontroller oder einem Mikroprozessor zugeführt, der mit einen nichtflüchtigen Speicher verbunden ist, damit die gespeicherten Daten auch bei Abschalten der Anlage oder Stromausfalls nicht verloren gehen. Vorteilhaft ist bei dieser Ausführungsform, dass die Kennlinie in einfacher Weise als Tabelle ablegbar ist und nicht komplizierte elektronische analoge Schaltungen zur Erzeugung des Kennlinienverhaltens nötig sind. Das dabei angewandte Verfahren besteht wiederum darin, dass nach einer jeweiligen Messung der Temperatur jeweils die Zeitdifferenz zu der letzten Messung der Temperatur gewichtet aufsummiert wird, wobei das Gewicht von der jeweiligen Temperatur abhängig ist gemäß der kritischen Kennlinie. Wenn die Aufsummation einen kritischen Wert überschreitet wird wiederum eine akustische, elektrische oder optische Warnung, insbesondere über Feldbus oder als 24 V Signal, heraus.

In einem weiteren erfindungsgemäßen Ausführungsbeispiel befindet sich der nichtflüchtige Speicher in einem Feldbusteilnehmer oder in einem zentralen Rechner, der an den Feldbus angeschlossen ist; somit werden die Messdaten nach jeder Messung zu diesem Speicher übertragen und dann von Zeit zu Zeit ausgewertet.

In einem weiteren erfindungsgemäßen Ausführungsbeispiel wird nicht nur die Temperatur erfasst sondern auch mindestens eine weitere physikalische Größe. Dazu wird ein Oberflächenwellensensor eingesetzt, der auf einem Silizium-Plättchen an einem Punkt oder Bereich Oberflächenwellen erzeugt, die sich entlang der Oberfläche des Plättchens ausbreiten und an einem anderen Punkt oder Bereich von einem Empfänger detektiert und/oder mindestens teilweise empfangen werden. Je nach Temperatur des Plättchens ist die Laufzeit der Oberflächenwellen zwischen Aussendung und Empfang verschieden.

Außerdem ist die Laufzeit von weiteren Größen beeinflussbar. Insbesondere ist hierbei eine Viskosität des an der Oberfläche oder im Bereich der Oberfläche sich befindenden Öls wichtig, da die Oberflächenwellen, insbesondere als Scherwellen, sich abhängig von der Viskosität verschieden schnell ausbreiten und verschieden stark gedämpft werden.

Die Erzeugung und der Empfang der Oberflächenwellen erfolgt mit auf dem Silizium-Plättchen aufgebrachten metallischen Strukturen, die jeweils kammförmig ausgebildet sind und jeweils eine Kapazität aufweisen. Somit ist die komplexe Dielektrizität des sich in der Nähe der Strukturen befindenden Öls messbar. Insbesondere ist auch die elektrische Leitfähigkeit erfassbar. Jede der genannten physikalischen Größen ist auch bei verschiedenen Frequenzen erfassbar, wenn die elektronische Schaltung hierfür geeignet ausgelegt wird.

In der elektronischen Schaltung werden nun bei weiteren Ausführungsbeispielen die Laufzeit und/oder die Dämpfung der Oberflächenwellen gemessen bei einer oder mehreren Temperaturen. Diese Messwerte sind zusammen mit den Messwerten für Temperatur, die vom Temperatursensor detektiert werden, speicherbar. Besonders günstig ist bei Verwendung eines Mikrocontrollers mit nichtflüchtigem Speicher die Abspeicherung der jeweiligen Messwerte zusammen mit Temperaturen.

Bei einem weiteren erfindungsgemäßen Verfahren werden die jeweiligen Messwerte zusammen mit Temperaturen in den ersten Betriebsstunden des Getriebes gemessen und abgespeichert. Somit liegen Messwerte bei mindestens einer Temperatur vor. Während des Betriebs werden von Zeit zu Zeit wieder die Temperatur und die mindestens eine physikalische Größe gemessen. Stimmt die Temperatur überein, ist die Veränderung des Wertes der physikalischen Größe feststellbar. Wenn diese Änderung einen kritischen Wert überschreitet, wird eine akustische, elektrische oder optische Warnung, insbesondere über Feldbus oder als 24 V Signal, ausgelöst.

Bei einem Getriebe, dessen Öl während der ersten Tage des Betriebs verschiedene Temperaturen aufweist, beispielsweise 20°C bis 80°C, sind die Werte der physikalischen Größen sogar für einen ganzen solchen Bereich in dichter Folge der Temperaturen abspeicherbar. Somit ist dann später, beispielsweise nach 10 Jahren, wieder mindestens ein Wert einer physikalischen Größe bei mindestens einer Temperatur vergleichbar mit dem Anfangszustand. Wenn die Differenz einen kritischen Wert überschreitet, wird eine akustische, elektrische oder optische Warnung, insbesondere über Feldbus oder als 24 V Signal, ausgelöst. Dabei ist der kritische Wert in einem erfindungsgemäßen Verfahren konstant. In einem anderen erfindungsgemäßen Verfahren ist dieser kritische Wert von der zugehörigen Temperatur abhängig.

In einem weiteren erfindungsgemäßen Ausführungsbeispiel wird mit einem Sensor die Temperatur und insbesondere als weitere physikalische Größe ein Wert für Viskosität erfasst. Dazu wird in der oben beschrieben Weise ein Oberflächenwellensensor verwendet, der im Kontakt steht mit dem Öl des Getriebes.

Zu Beginn des Betriebes des Öls, also bei Inbetriebnahme oder nach Ausführen eines Ölwechsels wird bei einer Temperatur T_1, von beispielsweise 80°C, ein erster Wert für Viskosität $\eta_o$ gemessen und abgespeichert. Die Abspeicherung erfolgt in einem ersten Beispiel in einer elektronischen Schaltung 303 gemäß Figur 3 und in einem weiteren Anordnung gemäß Figur 2 in einem Umrichter. Bei weiteren erfindungsgemäßen Ausführungsbeispielen erfolgt die Abspeicherung in einem über Feldbus verbundenen Feldbusteilnehmer oder in einer zentralen Steuerung.

Statt der Messung und Abspeicherung eines einzigen Wertes für Viskosität ist es bei weiteren erfindungsgemäßen Ausführungsbeispielen vorteilhaft mehrere Werte abzuspeichern oder Mittelwerte von Messwerten abzuspeichern. Mittelwerte von Messwerten dürfen jedoch nur bei jeweils der gleichen Temperatur gebildet werden. Unter ‚gleicher Temperatur' ist auch ein Temperaturbereich mit einer Ausdehnung von höchstens 1 K zu verstehen. Bei größeren Temperaturbereichen ist die Schwankung der Messwerte für Viskosität größer und somit der Fehler des gesamten Verfahrens größer.

Bei weiteren erfindungsgemäßen Ausführungsbeispielen werden die Messwerte für Viskosität bei verschiedenen Temperaturen gemessen, beispielsweise 70°C, 80°C, 85°C und 95°C. Die Abspeicherung umfasst dabei das Abspeichern der Messwerte für Viskosität zusammen mit der Temperatur. Statt der einzelnen Messwerte können wiederum Mittelwerte abgespeichert werden oder entsprechende statistische Größen, wie Standardabweichung oder dergleichen.

Bei diesen weiteren erfindungsgemäßen Ausführungsbeispielen wird während des Betriebs oder nach einer gewissen Betriebszeit wiederum ein Messwert für Viskosität bei zugehöriger Temperatur gemessen oder es werden mehrere Messwerte für Viskosität bei zugehörigen Temperaturen gemessen. Ebenso sind wiederum Mittelwerte oder statistische Größen verwendbar.

Der Messwert für Viskosität bei einer Temperatur T_1 wird nun mit dem Messwert für Viskosität $\eta_o$ verglichen. Falls die so ermittelte Differenz An einen kritischen Werte überschreitet, wird eine elektrische, optische oder akustische Warnung ausgelöst, da das Öl seinen Zustand in gefährlicher Weise verändert hat, insbesondere überbeansprucht oder gealtert ist.

Bei Abspeicherung mehrerer Messwerte für Viskosität werden diese Messwerte mit der jeweils bei entsprechender Temperatur gemessener Viskosität $\eta_o$ verglichen.

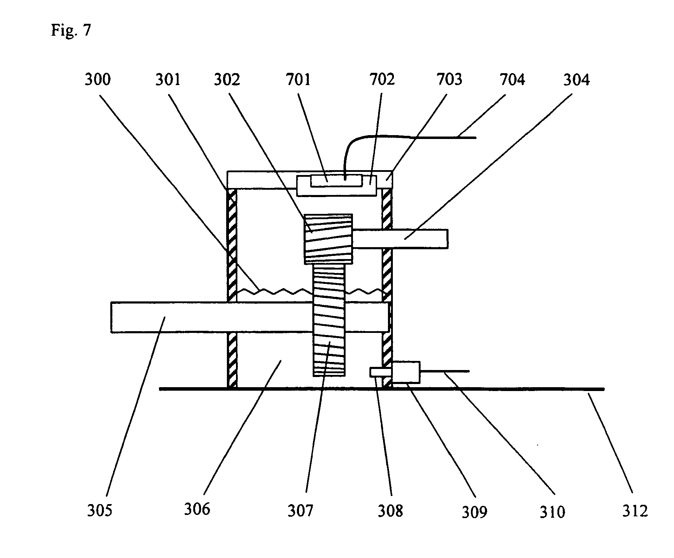

In der Figur 7 , die nicht zun Erfindung gehört ist noch ein weiteres Beispiel gezeigt, wobei die Auswerteelektronik 701 mittels einer Wärmesperre 702 vom Öl getrennt ist und an der Innenseite des Getriebedeckel 703 montiert ist, wobei die Leitung 704 durch den Getriebedeckel 703 hindurchgeführt ist. Von Vorteil ist dabei wiederum, dass die Auswerteelektronik 701 als elektronische Schaltung platzsparend kostengünstig integriert ist und kein zusätzliches Gehäuse benötigt wird. Trotz der hohen Temperatur des Schmierstoffs ist sie mit demselben Gehäuse schützbar, weil eine kostengünstig realisierbare Wärmesperre 702 angebracht ist. Ausführarten von Wärmesperren sind dem Fachmann bekannt. Die Wärmesperre hat zugleich die Funktion, den Schmierstoff von der elektronischen Schaltung fernzuhalten. Besonders einfach und schnell ausführbar ist beispielsweise ein Vergießen mit einer geeigneten Vergussmasse niedriger spezifischer Wärmeleitfähigkeit und hoher Inertheit gegen den Schmierstoff.

Wesentlicher weiterer Vorteil ist dabei, dass die Getriebedeckel mit oder ohne Auswerteelektronik 701 ausführbar sind. Somit ist je nach Kundenwunsch innerhalb einer Baureihe von Getrieben das Getriebe ausstattbar. Insbesondere sind auch vorhandene Getriebe kostengünstig, einfach und schnell nach- oder umrüstbar.

In der Figur 7 sind die Gehäuse bildenden Teile nicht nur als schemahafter Strich wie in Figuren 1 bis 3 dargestellt, sondern als ausgedehntere Objekte.

In einem anderen erfindungsgemäßen Ausführungsbeispiel wird nicht nur der jeweilige Messwert der physikalischen Größe $T$ verwendet, sondern es werden im jeweiligen Zeitpunkt alle vorher vorhandenen Werte und die zugehörigen Zeitabständen $\Delta t_i$ berücksichtigt. Dazu weist die Vorrichtung einen Speicher auf, der die Werte dauerhaft, auch bei Stromausfall, speichert. Aus allen bereits gemessenen Werten $T_i$ wird unter Verwendung eines vorbestimmbaren Kennlinienfeldes ein Funktionswert $f(\{T_i\})$ für alle jeweiligen Zeitabständen $\Delta t_i$ bestimmt. Aus allen diesen Funktionswerten und den jeweiligen Werten der Zeitabstände wird ein Ergebnis gebildet. Das Ergebnis wird auf ein Über- oder Unterschreiten eines bestimmten kritischen Wertes $W_{KRIT}$ überwacht und dann eine Information über Schmierstoffwechsel wegen Schmierstoffalterung und/oder Unbrauchbarkeit des Schmierstoffs erzeugt, angezeigt und/oder übermittelt.

In einem anderen erfindungsgemäßen Ausführungsbeispiel wird jeweils ein Alterungszustand $a_i$ bestimmt. Mit dem Messwert $T_i$ und dem Zeitabstand $\Delta t_i$ wird dann der neue Alterungszustand $a_{i+1}$ bestimmt, wobei Kennwerte berücksichtigt werden, die für unterschiedlich hohe Temperaturen und unterschiedliche Alterungszustände $a_i$ verschiedene Alterungsgeschwindigkeiten, also Zunahmen der Alterung pro Zeit, beschreiben. Der jeweilige Alterungszustand $a_i$ berücksichtigt somit sogar die Vorgeschichte des Temperaturverlaufs.

## Patentansprüche

1. Vorrichtung bei einem Antrieb,
wobei die Vorrichtung mindestens ein Getriebe und mindestens einen Sensor (107) umfasst,
wobei das Getriebe mindestens einstufig ausgeführt ist und mit einem umrichtergespeisten Elektromotor (103) mindestens mittelbar verbunden ist,
und wobei das Getriebe mindestens ein Schmiermittel umschließt,
**dadurch gekennzeichnet, dass**
der Sensor (107) derart elektrisch mit der Signalelektronik des Umrichters verbunden ist und mit dem Getriebe derart mechanisch verbunden ist, dass mittels des Sensors (107) mindestens eine physikalische Größe des Schmiermittels oder eine mit einer solchen physikalischen Größe verknüpfte Größe messbar ist,
und die Signalelektronik des Umrichters derart gestaltet ist, dass die gemessenen Werte der Größe zum Steuern und Regeln des Elektromotors (103) und zur Bestimmung einer anzeigbaren oder über Feldbus übermittelbaren Information für Schmierstoffwechsel und/oder Schmierstoffzustand verwendbar sind.

**2.** Vorrichtung nach Anspruch 1,
**dadurch gekennzeichnet, dass**
die physikalische Größe oder verknüpfte Größe mindestens die Temperatur ist und/order auch die Viskosität und/oder die komplexe Dielektrizität umfassend ist.

**3.** Vorrichtung nach einem der vorangegangenen Ansprüche,
**dadurch gekennzeichnet, dass**
das Schmiermittel Öl, Fließfett, Fett oder dergleichen ist.

**4.** Vorrichtung nach einem der vorangegangenen Ansprüche,
**dadurch gekennzeichnet, dass**
der **Sensor (107)** mindestens einen Temperatursensor umfasst und/oder auch einen Oberflächenwellensensor umfasst.

**5.** Vorrichtung nach Anspruch 4,
**dadurch gekennzeichnet, dass**
der Oberflächenwellensensor derart ausgeführt ist, dass eine Viskosität und/oder die komplexe Dielektrizität messbar ist.

**6.** Vorrichtung nach einem der vorangegangenen Ansprüche,
**dadurch gekennzeichnet, dass**
die verknüpfte Größe eindeutig von einer oder mehreren physikalischen Größen abhängt und/oder aus ihr mindestens eine physikalische Größe mit genügender Genauigkeit herleitbar ist.

**7.** Verwendung einer Vorrichtung nach Anspruch 1 bei einem Verfahren zur Bestimmung der Schmierstoffalterung,
**dadurch gekennzeichnet, dass**

- vom **Sensor (107)** Werte physikalischer Größen des Schmierstoffs in der Vorrichtung gemessen werden,
- mit der mit dem **Sensor (107)** verbundenen elektronischen Schaltung die Werte derart verarbeitet, ausgewertet und/oder weitergeleitet werden, dass
- zumindest bei Über- oder Unterschreiten bestimmter kritischer Werte eine Information über Schmierstoffwechsel wegen Schmierstoffalterung und/oder Unbrauchbarkeit des Schmierstoffs erzeugt und dann angezeigt und/oder übermittelt wird.

**8.** Verwendung nach Anspruch 7,
**dadurch gekennzeichnet, dass**
mittels der elektronischen Schaltung

- eine physikalische Größe $T$ immer wiederkehrend nach jeweiligen Zeitabständen $\Delta t_i$ gemessen wird,
- jeweils aus mindestens einem aller bereits gemessenen Werte $T_i$ mindestens unter Verwendung eines vorbestimmbaren Kennlinienfeldes ein Funktionswert $f(\{T_i\})$ bestimmt wird,
- aus allen diesen Funktionswerten und den jeweiligen Werten der Zeitabstände ein Ergebnis gebildet wird,
- das Ergebnis auf ein Über- oder Unterschreiten eines bestimmten kritischen Wertes $W_{KRIT}$ überwacht wird
- und dann eine Information über Schmierstoffwechsel wegen Schmierstoffalterung und/oder Unbrauchbarkeit des Schmierstoffs erzeugt und dann angezeigt und/oder übermittelt wird.

**9.** Verwendung nach Anspruch 7 oder 8,
**dadurch gekennzeichnet, dass**
mittels der elektronischen Schaltung

- eine physikalische Größe $T$ immer wiederkehrend nach jeweiligen Zeitabständen $\Delta t_i$ gemessen wird,
- jeweils aus diesem gemessenen Wert $T_i$ mindestens unter Verwendung einer vorbestimmbaren Kennlinie ein Funktionswert $f(T_i)$ bestimmt wird,
- dieser Funktionswert mit dem jeweiligen Wert des Zeitabstandes multipliziert wird,
- als Ergebnis die Summe all dieser Multiplikationsergebnisse gebildet wird,
- das Ergebnis auf ein Über- oder Unterschreiten eines bestimmten kritischen Wertes $W_{KRIT}$ überwacht wird
- und dann eine Information über Schmierstoffwechsel wegen Schmierstoffalterung und/oder Unbrauchbarkeit des Schmierstoffs erzeugt und dann angezeigt und/oder übermittelt wird

**10.** Verwendung nach einem der Ansprüche 8 bis 9,
**dadurch gekennzeichnet, dass**
die vorbestimmbare Kennlinie und die Funktion derart sind, dass bei konstanter physikalischer Größe

$T$ die Beziehung $f(T) = \frac{W_{KRIT}}{t_{MAX}}$ ist, wobei $t_{MAX}$ die maximal zulässige Betriebsdauer des Schmierstoffes bei ununterbrochenem Betrieb bei konstanter Temperatur
und/oder dass
das Ergebnis $\sum_i f(T_i)\Delta t_i$ ist, wobei i alle Zeitabstände durchläuft.

**11.** Verwendung nach einem der Ansprüche 7 bis 10,
**dadurch gekennzeichnet, dass**
mittels der elektronischen Schaltung

- eine physikalische Größe $T$ immer wiederkehrend nach jeweiligen Zeitabständen $\Delta t_i$ gemessen wird,
- aus diesem gemessenen Wert mindestens unter Verwendung einer vorbestimmbaren Kennlinie ein Funktionswert $f(T_i)$ bestimmt wird,
- der Wert einer zeitlich periodischen Funktion $g(f(T_i)t)$ bestimmt wird, deren Periode von dem Funktionswert $f(T_i)$ abhängt,
- dieser Funktionswert mit dem jeweiligen Wert des Zeitabstandes multipliziert wird,
- als Ergebnis die Summe all dieser Multiplikationsergebnisse gebildet wird,
- das Ergebnis auf ein Über- oder Unterschreiten eines bestimmten kritischen Wertes $W_{KRIT}$ überwacht wird,
- eine Information über Schmierstoffwechsel wegen Schmierstoffalterung und/oder Unbrauchbarkeit des Schmierstoffs erzeugt und dann angezeigt und/oder übermittelt wird.

**12.** Verwendung nach Anspruch 11,
**dadurch gekennzeichnet, dass**
das Ergebnis $\sum_i g(f(T_i),t)\Delta t_i$ ist, wobei i alle Zeitabstände durchläuft.

**13.** Verwendung nach einem der Ansprüche 11 bis 12,
**dadurch gekennzeichnet, dass**
die Funktion $g(f(T_i),t) = a * \sin(b * f(T_i) * t)$ ist, wobei a und b Parameter sind, oder die Funktion eine andere periodische Funktion ist

**14.** Verwendung nach einem der Ansprüche 7 bis 13,
**dadurch gekennzeichnet, dass**
mittels des Sensors (107) Temperatur gemessen wird
und/oder dass
mittels des Sensors (107) Größen, wie Viskosität, komplexe Dielektrizität, elektrische Leitfähigkeit und/oder dielektrische Konstante, gemessen werden, die einen Einfluss haben auf eine oder mehrere Eigenschaften von Oberflächenwellen,
und/oder dass
eine eindeutig mit einer oder mehreren physikalischen Größen verknüpfte Größe gemessen wird

**15.** Verwendung nach einem der Ansprüche 7 bis 14,
**dadurch gekennzeichnet, dass**
von der elektronische Schaltung die vom **Sensor (107)** gemessenen Werte oder entsprechende Informationen über einen Feldbus an einen zentralen Rechner oder an weitere Feldbusteilnehmer übertragen werden, abgespeichert werden und/oder zum Auslösen von Aktionen, zum Steuern und/oder zum Regeln verwendet werden

**16.** Verwendung nach einem der Ansprüche 11 bis 15,
**dadurch gekennzeichnet, dass**
die Veränderung der gemessenen Werte bestimmt wird und ab Überschreiten eines kritischen Wertes eine Warnung ausgelöst wird

**17.** Verwendung nach einem der Ansprüche 7 bis 16,
**dadurch gekennzeichnet, dass**
die Werte ein erstes Mal mindestens nach Inbetriebnahme und/oder Schmierstoffwechsel gemessen werden und mindestens ein weiteres Mal,
und dass die mindestens beiden Werte bei gleicher Temperatur gemessen werden, und dass die Differenz mindestens der beiden Werte bestimmt wird,
und dass bei Überschreiten eines kritischen Wertes für diese mindestens eine Differenz eine Warnung ausgelöst wird
und/oder dass
nach Auslösen der Warnung und/oder nach Überschreiten eines kritischen Wertes ein Schmierstoffwechsel durchgeführt wird.

## Claims

**1.** A device in a drive,
wherein the device comprises at least one gear unit and at least one sensor (107),
wherein the gear unit is designed at least single-stage and is connected at least indirectly to a converter-fed electric motor (103),
and wherein the gear unit includes at least one lubricant,
**characterised in that**
the sensor (107) is connected electrically in such a way to the signal electronics of the converter and is connected mechanically in such a way to the gear unit that at least one physical variable of the lubricant or a variable linked to such a physical variable can be measured by means of the sensor (107),
and the signal electronics of the converter is designed such that the measured values of the variable are used to control and regulate the electric motor (103) and to determine displayable information or information transmittable via a field bus concerning replacement of the lubricant and/or the state of the lubricant.

**2.** The device according to claim 1,
**characterised in that**
the physical variable or linked variable is at least the temperature and/or is comprised of the viscosity and/or the complex dielectricity.

**3.** The device according to any one of the preceding claims,
**characterised in that**
the lubricant is oil, low-viscosity grease, grease or suchlike.

**4.** The device according to any one of the preceding claims,
**characterised in that**
the **sensor (107)** comprises at least one temperature sensor and/or one surface wave sensor.

**5.** The device according to claim 4,
**characterised in that**
the surface wave sensor is designed such that a viscosity and/or the complex dielectricity is measurable.

**6.** The device according to any one of the preceding claims,
**characterised in that**
the linked variable depends uniquely on one or more physical variables and/or at least one physical variable can be derived from it with sufficient accuracy.

**7.** Use of a device according to claim 1 in a method for determining the ageing of the lubricant,
**characterised in that**

- values of physical variables of the lubricant in the device are measured by the **sensor (107),**
- with the electronic circuit connected to the **sensor (107),** the values are processed, evaluated and/or relayed such that,
- at least when specific critical values are exceeded or fallen below, information concerning lubricant replacement due to ageing of the lubricant and/or non-usability of the lubricant is generated and then displayed and/or transmitted.

**8.** The use according to claim 7,
**characterised in that,**
by means of the electronic circuit,

- a physical variable $T$ is measured recurrently after respective time intervals $\Delta t_i$,
- a function value $f(\{T_i\})$ is determined in each case from at least one of all the already measured values $T_i$ using a predeterminable field of characteristics,
- a result is formed from all these function values and the respective values of the time intervals,
- the result is monitored for exceeding or falling below a specific critical value $W_{KRIT}$
- and then information concerning lubricant replacement due to ageing of the lubricant and/or non-usability of the lubricant is generated and then displayed and/or transmitted.

**9.** The use according to claim 7 or 8,
**characterised in that,**
by means of the electronic circuit,

- a physical variable $T$ is measured recurrently after respective time intervals $\Delta t_i$,
- a function value $f(T_i)$ is determined in each case from this measured value $T_i$ at least using a predeterminable characteristic,
- this function value is multiplied by the respective value of the time interval,
- the sum of all these multiplication results is formed as a result,
- the result is monitored for exceeding or falling below a specific critical value $W_{KPJT}$
- and then information concerning lubricant replacement due to ageing of the lubricant and/or non-usability of the lubricant is generated and then displayed and/or transmitted.

**10.** The use according to any one of claims 8 to 9,
**characterised in that**
the predeterminable characteristic and the function are such that the relationship is $f(T) = \frac{W_{KRIT}}{t_{MAX}}$ with a constant physical variable $T$, wherein $t_{MAX}$ is the maximum permissible service life of the lubricant with uninterrupted operation at constant temperature and/or that
the result is $\sum_i f(T_i)\Delta t_i$, wherein i runs through all the time intervals.

**11.** The use according to any one of claims 7 to 10,
**characterised in that,**
by means of the electronic circuit,

- a physical variable $T$ is measured recurrently after respective time intervals $\Delta t_i$,
- a function value $f(T_i)$ is determined from this measured value at least using a predeterminable characteristic,
- the value of a temporally periodic function $g(f(T_i),t)$ is determined, the period whereof is dependent on the function value $f(T_i)$,

- this function value is multiplied by the respective value of the time interval,
- the sum of all these multiplication results is formed as a result,
- the result is monitored for exceeding or falling below a specific critical value $W_{KRIT}$
- information concerning lubricant replacement due to ageing of the lubricant and/or non-usability of the lubricant is generated and then displayed and/or transmitted.

**12.** The use according to claim 11,
**characterised in that**
the result is $\sum_i g(f(T_i),t)\Delta t_i$, wherein i runs through all the time intervals.

**13.** The use according to any one of claims 11 to 12,
**characterised in that**
the function is $g(f(T_i),t) = a * \sin(b * f(T_i) * t)$, wherein a and b are parameters, or the function is another periodic function.

**14.** The use according to any one of claims 7 to 13,
**characterised in that**
temperature is measured by means of the sensor (107)
and/or that,
by means of the sensor (107), variables, such as viscosity, complex dielectricity, electrical conductivity and/or dielectric constant, are measured, which have an influence on one or more properties of surface waves,
and/or that
a variable linked uniquely to one or more physical variables is measured.

**15.** The use according to any one of claims 7 to 14,
**characterised in that**
the values measured by the **sensor (107)** or corresponding information are transmitted by the electronic circuit via a field bus to a central computer or to further field bus participants, are stored and/or are used to trigger actions, to control and/or to regulate.

**16.** The use according to any one of claims 11 to 15,
**characterised in that**
the change in the measured values is determined and a warning is triggered once a critical value is exceeded.

**17.** The use according to any one of claims 7 to 16,
**characterised in that**
the values are measured a first time at least after start-up and/or lubricant replacement and at least one further time,
and that the at least two values are measured at the same temperature,
and that the difference between the at least two values is determined,
and that a warning is triggered if a critical value for this at least one difference is exceeded and/or that a lubricant replacement is carried out after triggering of the warning and/or after a critical value is exceeded.

## Revendications

**1.** Dispositif dans le cas d'un entraînement,
le dispositif comprenant au moins un engrenage et au moins un capteur (107),
l'engrenage étant réalisé avec au moins un étage et étant relié au moins indirectement à un moteur électrique (103) alimenté par convertisseur,
et l'engrenage enfermant au moins un lubrifiant,
**caractérisé en ce que**
le capteur (107) est relié électriquement à l'électronique de signal du convertisseur et est relié mécaniquement à l'engrenage de telle sorte qu'au moins une grandeur physique du lubrifiant ou une grandeur associée à une telle grandeur physique peut être mesurée au moyen du capteur (107),
et l'électronique de signal du convertisseur est conçue de telle sorte que les valeurs mesurées de la grandeur peuvent être utilisées pour commander et réguler le moteur électrique (103) et pour déterminer une information pouvant être affichée et transmise par bus de zone pour un changement de lubrifiant et/ou un état de lubrifiant.

**2.** Dispositif selon la revendication 1,
**caractérisé en ce que**
la grandeur physique ou la grandeur associée est au moins la température et/ou également la viscosité et/ou la permittivité complexe est (sont) étendue(s).

**3.** Dispositif selon l'une quelconque des revendications précédentes,
**caractérisé en ce que**
le lubrifiant est de l'huile, de la graisse fluide, de la graisse ou similaire.

**4.** Dispositif selon l'une quelconque des revendications précédentes,
**caractérisé en ce que**
le **capteur (107)** comporte au moins un capteur de température et/ou comporte également un capteur d'onde de surface.

**5.** Dispositif selon la revendication 4,
**caractérisé en ce que**
le capteur d'ondes de surface est réalisé de telle sorte qu'une viscosité et/ou la permittivité complexe peut(peuvent) être mesurée(s).

**6.** Dispositif selon l'une quelconque des revendications précédentes,
**caractérisé en ce que**
la grandeur associée dépend clairement d'une ou de plusieurs grandeurs physiques et/ou au moins une grandeur physique peut être déduite de cette grandeur avec une précision suffisante.

**7.** Utilisation d'un dispositif selon la revendication 1 avec un procédé pour déterminer le vieillissement du lubrifiant,
**caractérisée en ce que**

- des valeurs de grandeurs physiques du lubrifiant sont mesurées par le **capteur (107)** dans le dispositif,
- les valeurs sont traitées, analysées et/ou transmises avec le circuit électronique relié au **capteur (107), en ce que**
- au moins dans le cas d'un dépassement ou d'un sous-dépassement de certaines valeurs critiques, une information concernant le changement de lubrifiant en raison du vieillissement du lubrifiant et/ou d'une impossibilité d'utiliser le lubrifiant est générée et affichée alors et/ou transmise.

**8.** Utilisation selon la revendication 7,
**caractérisée en ce que,**
au moyen du circuit électronique,

- une grandeur physique $T$ est mesurée toujours de façon récurrente selon des intervalles de temps respectifs $\Delta t_i$,
- une valeur de fonction $f(\{T_i\})$ est déterminée à chaque fois à partir d'au moins une de toutes les valeurs $T_i$ déjà mesurées au moins en utilisant un réseau de caractéristiques prédéfinissable,
- un résultat est formé à partir de toutes ces valeurs de fonction et des valeurs respectives des intervalles de temps,
- le résultat au niveau d'un dépassement ou d'un sous-dépassement d'une valeur critique $W_{KRIT}$ définie est contrôlé
- et ensuite une information concernant le changement de lubrifiant en raison du vieillissement du lubrifiant et/ou de l'impossibilité d'utiliser le lubrifiant est générée puis affichée et/ou transmise.

**9.** Utilisation selon la revendication 7 ou 8,
**caractérisée en ce que**
au moyen du circuit électronique,

- une grandeur $T$ physique est mesurée toujours de façon récurrente d'après des intervalles de temps $\Delta t_i$ respectifs,
- une valeur de fonction $f(T_i)$ est déterminée à chaque fois à partir de cette valeur $T_i$ mesurée au moins en utilisant une caractéristique prédéfinissable,
- cette valeur de fonction est multipliée par la valeur respective de l'intervalle de temps,
- la somme de tous ces résultats de multiplication est constituée comme résultat,
- le résultat est contrôlé au niveau d'un dépassement ou d'un sous-dépassement d'une valeur critique $W_{KRIT}$ définie
- et ensuite une information concernant le changement de lubrifiant en raison d'un vieillissement de lubrifiant et/ou d'une impossibilité d'utiliser le lubrifiant est générée puis affichée et/ou transmise.

**10.** Utilisation selon l'une quelconque des revendications 8 à 9,
**caractérisée en ce que**
la caractéristique prédéfinissable et la fonction sont conçues de telle sorte que, pour une grandeur physique $T$ constante, la relation $f(T)=\frac{W_{KRIT}}{t_{MAX}}$,
$t_{MAX}$ étant la durée de service maximale autorisée du lubrifiant avec un fonctionnement continu à température constante et/ou en ce que
le résultat est $\sum_i f(T_i)\Delta t_i$, i passant par tous les intervalles de temps.

**11.** Utilisation selon l'une quelconque des revendications 7 à 10,
**caractérisée en ce que,**
au moyen du circuit électronique,

- une grandeur physique $T$ est mesurée toujours de façon récurrente d'après des intervalles de temps $\Delta t_i$ respectifs,
- une valeur de fonction $f(T_i)$ est déterminée à partir de cette valeur mesurée au moins en utilisant une caractéristique prédéfinissable,
- la valeur d'une fonction $g(f(T_i),t)$ périodique dans le temps est déterminée, fonction dont la période dépend de la valeur de fonction $f(T_i)$,
- cette valeur de fonction est multipliée par la valeur respective de l'intervalle de temps,
- le total de tous ces résultats de multiplication est formé comme résultat,
- le résultat est contrôlé au niveau d'un dépassement ou d'un sous-dépassement d'une valeur critique $W_{KRIT}$ définie,
- une information concernant le changement de lubrifiant dû au vieillissement du lubrifiant et/ou à l'impossibilité d'utiliser le lubrifiant est générée puis affichée et/ou transmise.

**12.** Utilisation selon la revendication 11,
**caractérisée en ce que**
le résultat est $\sum_i g(f(T_i),t)\Delta t_i$, i passant par tous les intervalles de temps.

**13.** Utilisation selon l'une quelconque des revendications 11 à 12,
**caractérisée en ce que**
la fonction $g(f(T_i),t)$ est égale à a * $sin(b * f(T_i) * t)$, a et b étant des paramètres ou la fonction étant une autre fonction périodique.

**14.** Utilisation selon l'une quelconque des revendications 7 à 13,
**caractérisée en ce que**
la température est mesurée au moyen du capteur (107)
et/ou **en ce que**
des grandeurs telles que viscosité, permittivité complexe, conductibilité électrique et/ou constante diélectrique, qui ont une incidence sur une ou plusieurs propriétés d'ondes de surface, sont mesurées au moyen du capteur (107),
et/ou **en ce que**
une grandeur associée clairement à une ou plusieurs grandeurs physiques est mesurée.

**15.** Utilisation selon l'une quelconque des revendications 7 à 14,
**caractérisée en ce que**
les valeurs mesurées par le **capteur (107)** ou des informations correspondantes sont transmises par le circuit électronique au moyen d'un bus de zone à un ordinateur central ou à d'autres usagers du bus de zone, sont stockées et/ou sont utilisées pour le déclenchement d'actions, pour la commande et/ou pour la régulation.

**16.** Utilisation selon l'une quelconque des revendications 11 à 15,
**caractérisée en ce que**
la modification des valeurs mesurées est déterminée et une alerte est déclenchée à partir du dépassement d'une valeur critique.

**17.** Utilisation selon l'une quelconque des revendications 7 à 16,
**caractérisée en ce que**
les valeurs sont mesurées une première fois au moins après la mise en service et/ou le changement de lubrifiant et au moins une autre fois,
et **en ce que** les au moins deux valeurs sont mesurées à une température identique,
et **en ce que** la différence au moins des deux valeurs est déterminée,
et **en ce qu'**une alerte est déclenchée en cas de dépassement d'une valeur critique pour cette au moins une différence
et/ou **en ce que**
un changement de lubrifiant est effectué après le déclenchement de l'alerte et/ou après le dépassement d'une valeur critique.

Fig. 1

100
101
102
103
104
105
106
107
108
109
110

Fig. 2

200
201
202
212
211
210
203
204
205
206
207
208
209
213

Fig. 3

300
301
302
311
303
310
304
305
306
307
308
309
310
312

Fig. 4

T / °C
120
110
100
90
85
80
70
60
0
2500
5000
26000
t / h

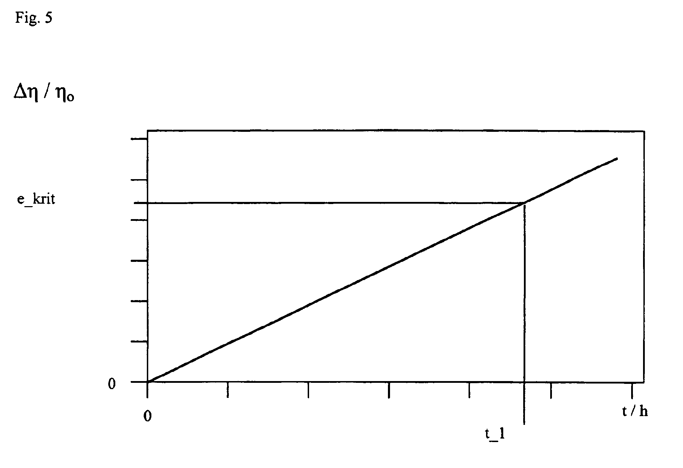

Fig. 5

Δη / η₀

e_krit
0
0
t_1
t / h

Fig. 6a

T
t

Fig. 6b

U
t

Fig. 6c

N
N krit
t

Fig. 7

300
301
302
701
702
703
704
304
305
306
307
308
309
310
312

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19755128 A1
- DE 19860353 C1
- DE 19706486 A1
- DE 19608591 A1
- US 5944632 A